# EUROPEAN PATENT APPLICATION

(11) **EP 4 653 364 A1**
(43) Date of publication of application: **26.11.2025**
(21) Application number: 24889165.7
(22) Date of filing: 08.11.2024
(51) Int. Cl.: B65H 41/00, B65H 29/54, B65H 5/06

(54) **FILM PEELING DEVICE**

(30) Priority: 10.11.2023 KR 20230155048
(71) Applicant: LG Energy Solution, Ltd., Seoul 07335 (KR)
(72) Inventor: KIM, Ju Han, Daejeon 34122 (KR); CHOI, Kyu Hyun, Daejeon 34122 (KR); CHUNG, Chang Kwon, Daejeon 34122 (KR)
(74) Representative: Goddar, Heinz J.
(86) International application number: PCT/KR2024/017574
(87) International publication number: WO 2025/100979

(57) **Abstract**

The present disclosure relates to a film peeling device for removing a release film from a pad to which the release film is attached to the lower portion, and the film peeling device includes a pair of rollers for applying pressure to an upper portion and a lower portion of the pad; and a film removal unit disposed adjacent to the rollers for removing the release film of the pad passing through the rollers; wherein the film removal unit includes a supporter for supporting the lower portion of the pad; and a separation member located at a rear end of the supporter for separating the release film of the pad supported by the supporter.

## Description

### [Technical Field]

The present disclosure relates to a film peeling device, and more specifically, to a film peeling device capable of effectively removing a release film from a pad to which the release film is attached on a surface.

This application claims the benefit of priority from Korean Patent Application No. 10-2023-0155048, filed on November 10, 2023, and all of the contents of the Korean Patent Application are incorporated by reference into this disclosure.

### [Background]

The operating voltage of one cell included in a secondary battery is approximately 2.5V to 4.5V. Accordingly, when a higher output voltage than this is required, a plurality of cells may be connected in series to form a battery pack.

When constructing a battery pack by connecting a plurality of cells in series/parallel, it is common to first construct a cell assembly comprising at least two cells, and then add such cell assemblies and other components to construct a battery pack.

Various pads, plates, and the like may be further used in the manufacturing process of such a secondary battery. For example, in the case of a cell assembly in which a plurality of cells are included in a stacked form, pads or the like may be interposed to alleviate impacts or the like that may occur between each cell.

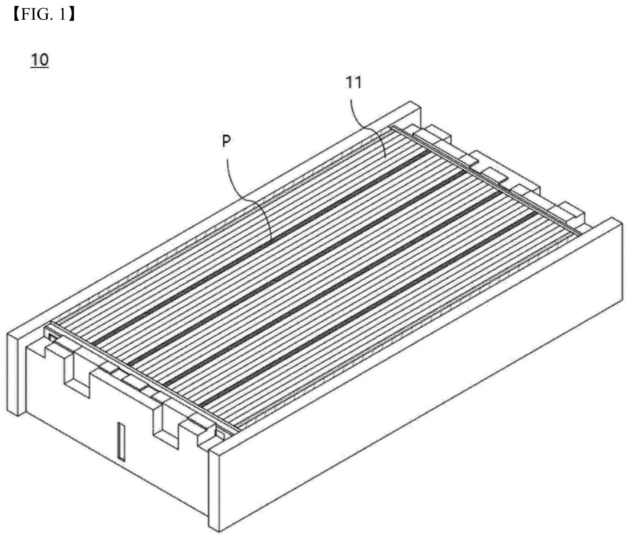

FIG. 1 illustrates an example of a conventional cell assembly 10, in which a plurality of cells 11 are disposed stacked side by side. In this case, a pad P which acts as a buffer is interposed between any one pair of cells 11, as shown in FIG. 1.

The pad P may be in a state in which adhesive components, or the like are coated on the surface to effectively fix the pad P to the cell 11 disposed in contact.

Thus, the pad P is transferred in the production process with a release film F attached thereto to protect the adhesive component or the surface of the pad P, etc. from the external environment. At this time, the release film F is removed from the pad P prior to inserting the pad P into the cell assembly 10 or the like.

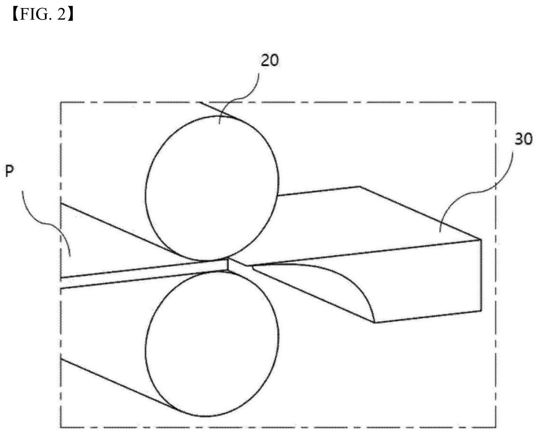

FIG. 2 is a perspective view of a conventional film peeling device used to remove a release film F from a pad P.

Referring to FIG. 2, the conventional film peeling device comprises a separation member 30 disposed such that a sharp end faces toward the pad P, and a pair of rollers 20 guiding the pad P to the separation member 30.

The separation member 30 separates the pad P passing between the rollers 20 from the release film F attached to the lower portion of the pad P, and removes the release film F from the pad P.

However, depending on the dimensions such as the thickness of the pad P used, the process of removing the release film F may have problems.

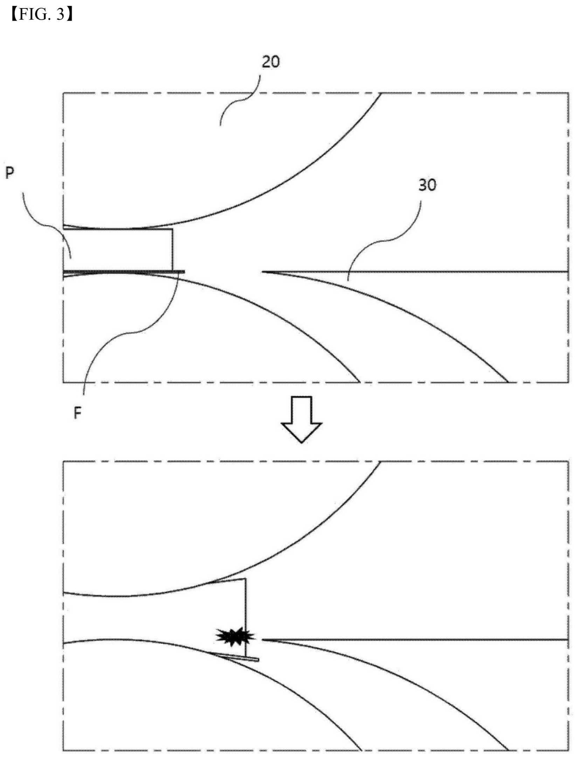

FIG. 3 illustrates an embodiment of using the film peeling device of FIG. 2 for removing a release film F from pads P of different thicknesses.

In the case of a thicker thickness of the pad P, the highly compressible pad P is greatly expanded at the point of passing through the rollers 20, thereby causing the release film F attached to the lower portion to be located further down than before. Therefore, the separation member 30 cannot completely remove the release film F, and cuts the pad P or damages a part of the pad P.

In order to solve the above problems, there is a need for the development of a film peeling device applicable to a pad P of any dimension.

### [Related Art Document]

Korean Patent Publication No. 10-2023-0109434

### [Summary]

### [Technical Problem]

Therefore, the present disclosure is directed to providing a film peeling device capable of effectively removing a release film from a pad, which has been invented to solve the above problems.

Other objects and advantages of the present disclosure may be understood from the following description and will become more apparent through embodiments of the present disclosure. In addition, it will be readily appreciated that the objects and advantages of the present disclosure may be realized by the means and combinations thereof as set forth in the appended claims.

### [Technical Solution]

According to the present disclosure, a film peeling device is provided that removes a release film from a pad to which the release film is attached to the lower portion.

The film peeling device includes a pair of rollers for applying pressure to an upper portion and a lower portion of the pad; and a film removal unit disposed adjacent to the rollers for removing the release film of the pad passing between the rollers; wherein the film removal unit includes a supporter for supporting the lower portion of the pad; and a separation member located at a rear end of the supporter for separating the release film from the pad supported by the supporter.

The supporter may include a support surface at the upper portion thereof that supports the lower portion of the pad to guide the movement of the pad.

The support surface may have a flat shape.

The supporter may be inclined at the upper portion so that the height of the pad moving along the support surface increases.

The supporter may be inclined in a curved shape at the upper portion.

The separation member may include a blade at the end facing the supporter.

The end of the separation member may be spaced apart from the support surface of the supporter by a predetermined interval, and the release film separated from the pad may be discharged through a gap formed between the supporter and the separation member.

The separation member may be positioned such that the blade faces the boundary portion between the pad and the release film.

The height of the end of the separation member may be at least higher than the height of the support surface of the supporter.

The difference in height between the end of the separation member and the support surface may be at least greater than the thickness of the release film.

The rollers may include an upper roller that applies pressure to the upper portion of the pad and rotates in one direction; and a lower roller provided at the lower portion of the upper roller that applies pressure to the lower portion of the pad and rotates in a direction opposite to the rotation direction of the upper roller.

The supporter may be disposed such that the end facing the rollers faces the lower roller.

### [Advantageous Effects]

The present disclosure can improve the process efficiency by effectively removing the release film from the pad to which the release film is attached.

### [Brief Description of the Drawings]

FIG. 1 is a perspective view of a conventional cell assembly.
FIG. 2 is a perspective view of a conventional film peeling device.
FIG. 3 is a schematic diagram illustrating an embodiment of using the film peeling device of FIG. 2.
FIG. 4 is a perspective view of a film peeling device according to a first embodiment of the present disclosure.
FIG. 5 is a perspective view of a film removal unit of the present disclosure.
FIG. 6 is a schematic diagram illustrating an embodiment of using the film peeling device of FIG. 4.
FIG. 7 is a schematic diagram illustrating another embodiment of using the film peeling device of FIG. 4.
FIG. 8 is a schematic diagram illustrating another embodiment of using the film peeling device of FIG. 4.
FIG. 9 is a schematic diagram illustrating another embodiment of using the film peeling device of FIG. 4.
FIG. 10 is a perspective view of a film removal unit included in a film peeling device according to a second embodiment of the present disclosure.
FIG. 11 is a perspective view of a film removal unit included in a film peeling device according to a third embodiment of the present disclosure.

### [Detailed Description]

Hereinafter, preferred embodiments of the present disclosure will be described in detail with reference to the accompanying drawings. Before this, terms or words used in the specification and claims should not be interpreted as being limited to their conventional or dictionary meanings, and should be interpreted with meanings and concepts that correspond to the technical spirit of the present disclosure, based on the principle that an inventor can appropriately define the concepts of terms to explain the invention in the best way.

Therefore, the embodiments described in this specification and the configurations shown in the drawings are merely the most preferred embodiments of the present disclosure and do not represent all the technical spirit of the present disclosure. Thus, it should be understood that various equivalents and modifications capable of replacing them may exist at the time of filing this application.

In addition, detailed descriptions of known configurations or functions related to the present disclosure will be omitted when it is determined that they may obscure the gist of the present disclosure.

The embodiments of the present disclosure are provided to more completely explain the present disclosure to those skilled in the art, so the shapes and sizes of the components in the drawings may be exaggerated, omitted, or schematically illustrated for clearer explanation. Therefore, the size or ratio of each component does not fully reflect the actual size or ratio.

The present disclosure relates to a film peeling device, and more specifically, to a film peeling device capable of effectively removing a release film from a pad to which the release film is attached on a surface.

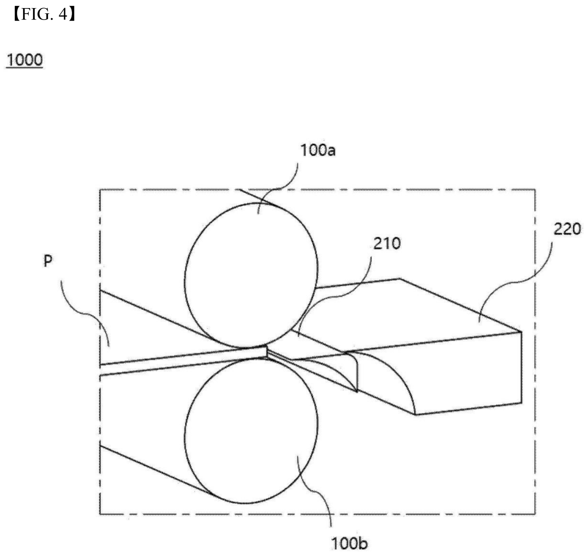

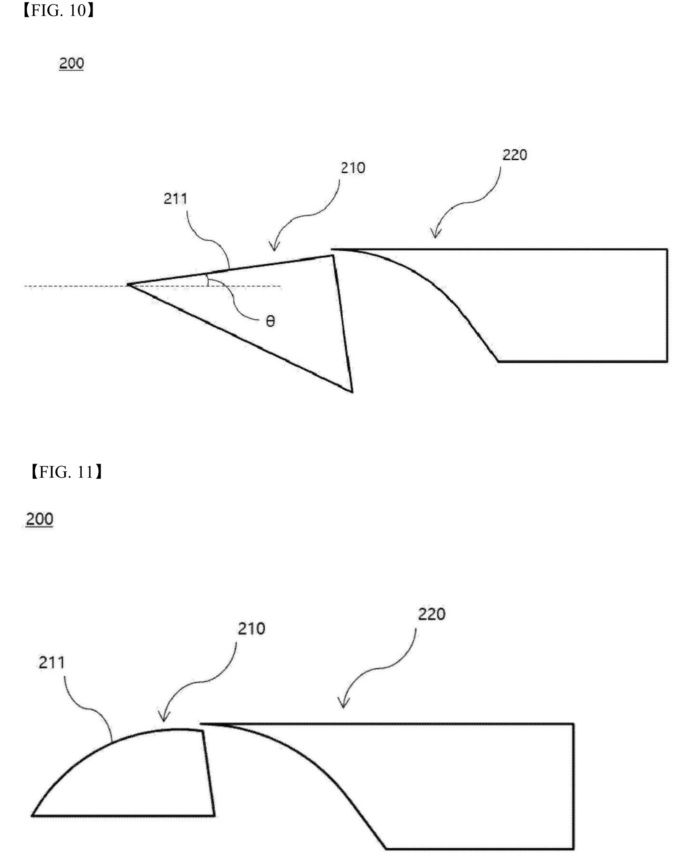

FIGS. 4 to 9 relate to a film peeling device according to a first embodiment of the present disclosure, and FIGS. 10 to 11 relate to film peeling devices according to second and third embodiments of the present disclosure, respectively.

Hereinafter, specific embodiments of the film peeling device of the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### (first embodiment)

The film peeling device 1000 of the present disclosure removes the release film F from the pad P to which the release film F is attached on one side.

The pad P is interposed between cells and serves as a buffer to partially absorb external impacts and protect the cells.

The release film F serves to protect the surface of the pad P and is removed before applying the pad P to the cell.

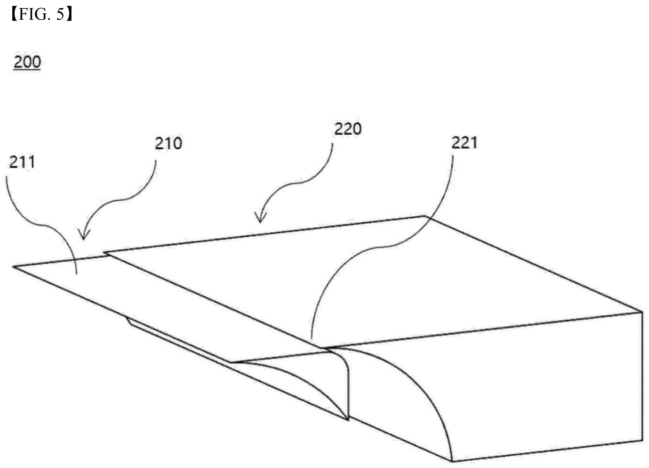

FIG. 4 is a perspective view of a film peeling device 1000 according to a first embodiment of the present disclosure, and FIG. 5 is a perspective view of a film removal unit 200 of the present disclosure.

The film peeling device 1000 of the present disclosure includes a pair of rollers 100 and a film removal unit 200 disposed adjacent to the rollers 100, as shown in FIG. 4.

The pad P passes between the rollers 100 with the release film F that needs to be removed positioned at the lower portion.

The pair of rollers 100 simultaneously applies pressure to the upper and lower portions of the pad P being transferred in one direction.

The rollers 100 include an upper roller 100a that applies pressure to the upper portion of the pad P and rotates in one direction, and a lower roller 100b that rotates in a direction opposite to the rotation direction of the upper roller 100a.

Since the release film F is attached to the lower portion of the pad P, the lower roller 100b becomes the part that directly contacts the release film F.

The film removal unit 200 is disposed adjacent to the rollers 100 and removes the release film F from the pad P passing between the rollers 100.

The film removal unit 200 includes a supporter 210 disposed adjacent to the rollers 100 and a separation member 220 spaced apart at a predetermined interval from the rear end of the supporter 210.

Since the position of the pad P discharged after passing through the rollers 100 may vary, there is a need to stably support the lower portion of the pad P, and the supporter 210 performs this role. That is, the supporter 210 serves to support the lower portion of the pad P discharged through the rollers 100.

It is preferable that the supporter 210 is disposed such that the end facing the rollers 100 is directed toward the lower roller 100b. This is to effectively remove only the release film F attached to the lower portion of the pad P without interfering with the movement path of the pad P passing through the upper roller 100a and the lower roller 100b.

The supporter 210 includes a support surface 211 at the upper portion that supports the lower portion of the pad P to guide the movement of the pad P.

The support surface 211 may have a flat shape as shown in FIGS. 4 and 5.

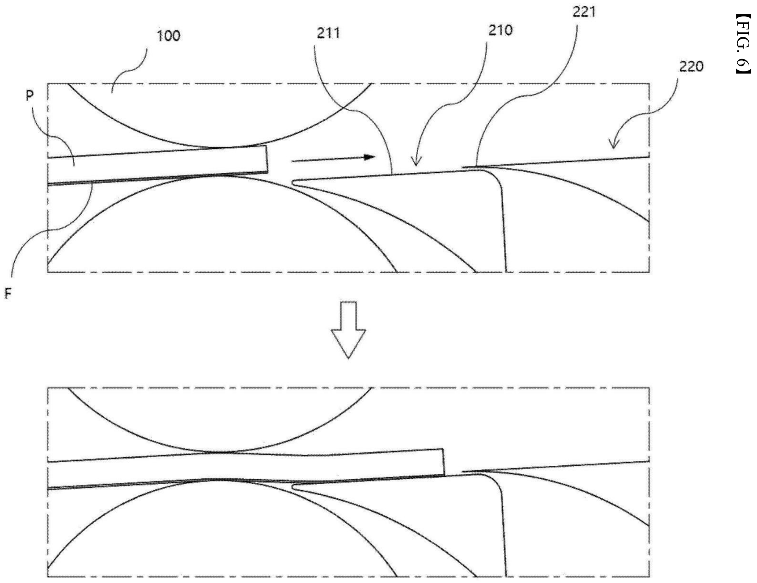

FIG. 6 is a schematic diagram illustrating an embodiment of using the film peeling device 1000 of FIG. 4.

According to FIG. 6, the pad P maintains a horizontal position and moves while being supported on the support surface 211 of the supporter 210. At this time, the release film F directly contacts the support surface 211 from the lower portion of the pad P.

The supporter 210 maintains the height of the boundary portion of the release film F and the pad P constant based on the support surface 211, regardless of the thickness of the pad P.

The separation member 220 serves to separate, at the rear end of the supporter 210, the release film F from the pad P supported by the supporter 210.

The separation member 220 includes a blade 221 at the end facing the supporter 210, as shown in FIG. 5.

The separation member 220 is positioned such that the blade 221 faces the boundary portion of the pad P and the release film F.

The blade 221 splits the boundary portion of the pad P and the release film F supported by the supporter 210 to separate the release film F. Therefore, it is preferable that the height of the end of the separation member 220, that is, the blade 221, is at least higher than the height of the support surface 211 of the supporter 210. In this case, if the height of the blade 221 is equal to or lower than the height of the support surface 211, the release film F attached to the lower portion of the pad P may not reach the blade 221 and may not be separated.

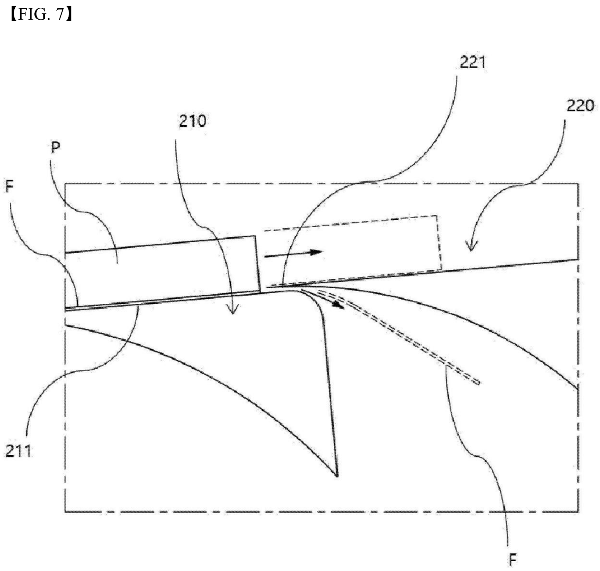

FIG. 7 is a schematic diagram illustrating another embodiment of using the film peeling device 1000 of FIG. 4.

According to FIG. 7, the end of the separation member 220 is spaced apart from the support surface 211 of the supporter 210 by a predetermined interval.

More specifically, the blade 221 of the separation member 220 is spaced upward from the supporter 210 by a predetermined interval, and a gap is formed between the blade 221 and the supporter 210. The pad P that is supported on the support surface 211 and transferred toward the separation member 220 moves over the upper portion of the separation member 220 with the release film F removed from its lower portion by the blade 221. At this time, the release film F peeled off by the blade 221 is removed by falling through the gap between the supporter 210 and the separation member 220.

Therefore, for the release film F to completely fall through the gap, the difference in height between the end of the separation member 220, that is, the blade 221, and the support surface 211 should be at least equal to or greater than the thickness of the release film F.

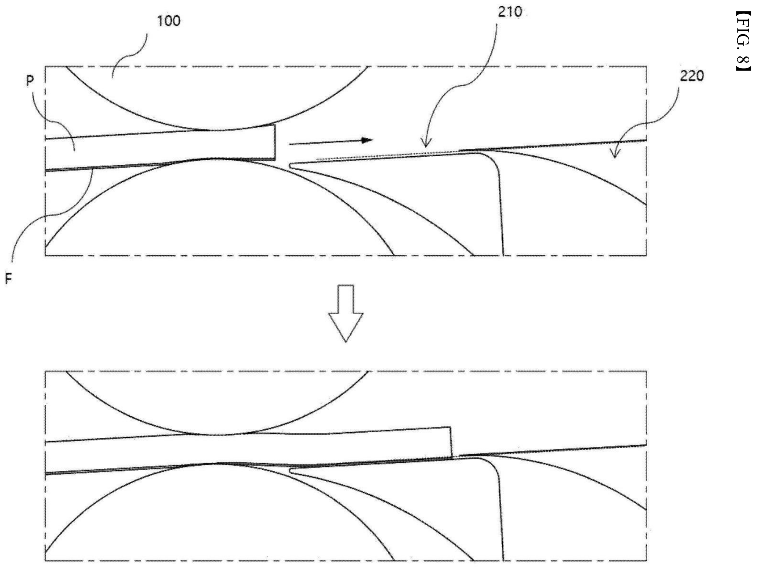

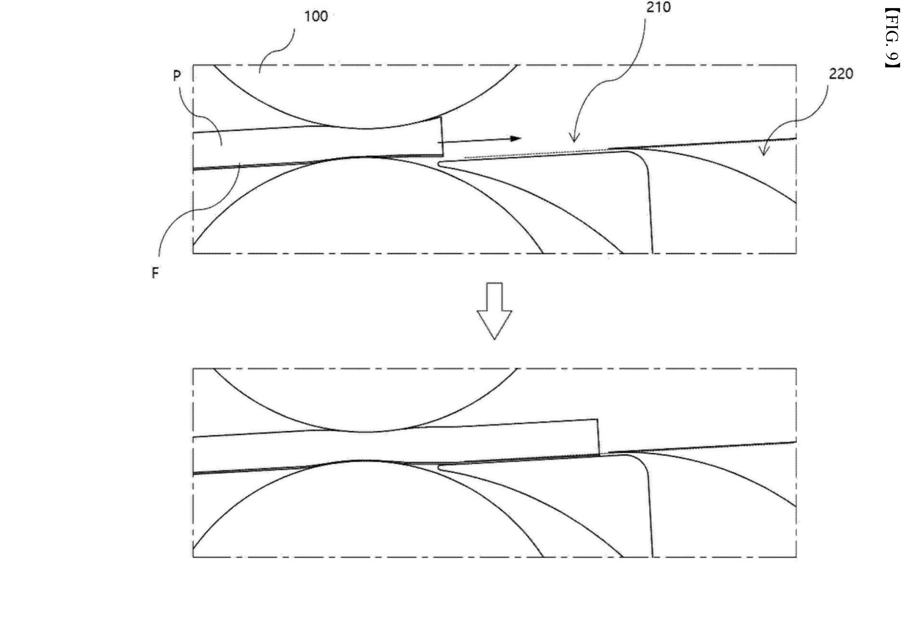

FIG. 8 is a schematic diagram illustrating another embodiment of using the film peeling device 1000 of FIG. 4, and FIG. 9 is a schematic diagram illustrating another embodiment of using the film peeling device 1000 of FIG. 4.

The rollers 100 used in FIGS. 8 and 9 are all of the same dimension and spaced at the same interval, and the film removal unit 200 used is also disposed in the same location. However, the thickness of the pad P conveyed in FIG. 9 is thicker than the thickness of the pad P disclosed in FIG. 8.

However, referring to the dotted line indicating the height of the blade 221 of the separation member 220, the blades 221 used in each example are all equally directed toward the boundary point between the pad P and the release film F. That is, FIGS. 8 and 9 show that even if the thickness of the pad P changes, the release film F can be effectively removed in the same way if the interval and disposition position of the supporter 210 and the separation member 220 are the same.

### (second embodiment)

FIG. 10 is a perspective view of a film peeling device 1000 according to a second embodiment of the present disclosure.

The supporter 210 is inclined at the upper portion so that the height of the pad P moving along the support surface 211 increases. That is, the supporter 210 is formed such that the support surface 211 is inclined.

According to FIG. 10, the support surface 211 is inclined upward by a predetermined angle (θ) with reference to a horizontal imaginary dotted line that is parallel to the upper surface of the separation member 220.

Therefore, the pad P passing between the rollers 100 slides upward along the slope of the support surface 211.

When the end of the pad P passing between the rollers 100 is bent or curved in various directions, the supporter 210 with such a structure can, with high probability, contact the end of the pad P and guide the movement of the pad P.

### (third embodiment)

FIG. 11 is a perspective view of a film peeling device 1000 according to a third embodiment of the present disclosure.

The supporter 210 is inclined in a curved shape at the upper portion. That is, the supporter 210 has the support surface 211 formed in a curved shape.

Therefore, the pad P passing between the rollers 100 slides upward along the curved slope of the support surface 211.

When the end of the pad P passing between the rollers 100 is bent or curved in various directions, the supporter 210 with such a structure can, with high probability, contact the end of the pad P and guide the movement of the pad P.

As aforementioned, the present disclosure has been described in more detail through the drawings, embodiments, and the like. However, since the configuration described in the drawings or embodiments, etc. described herein is merely one embodiment of the present disclosure and does not represent all of the technical spirit of the disclosure, it should be understood that there may be various equivalents, modifications, and substitutions capable of replacing these at the time of filing of this application.

### [Description of Reference Numerals]

10: (conventional art) cell assembly
11: (conventional art) cell
20: (conventional art) roller
30: (conventional art) separation member
1000: film peeling device
100: roller
100a: upper roller
100b: lower roller
200: film removal unit
210: supporter
211: support surface
220: separation member
221: blade
P: pad
F: release film

## Claims

1. A film peeling device for removing a release film from a pad to which the release film is attached to the lower portion thereof, the film peeling device comprising:
a pair of rollers for applying pressure to an upper portion and a lower portion of the pad; and
a film removal unit disposed adjacent to the pair of rollers for removing the release film of the pad passing between the pair of rollers;
wherein the film removal unit comprises:
a supporter for supporting the lower portion of the pad; and
a separation member located at a rear end of the supporter for separating the release film of the pad supported by the supporter.

2. The film peeling device of claim 1, wherein the supporter comprises a support surface at the upper portion thereof that supports the lower portion of the pad to guide the movement of the pad.

3. The film peeling device of claim 2, wherein the support surface has a flat shape.

4. The film peeling device of claim 2, wherein the supporter is inclined at the upper portion thereof so that the height of the pad moving along the support surface increases.

5. The film peeling device of claim 4, wherein the supporter is inclined in a curved shape at the upper portion thereof.

6. The film peeling device of claim 1, wherein the separation member comprises a blade at the end thereof facing the supporter.

7. The film peeling device of claim 1, wherein the end of the separation member is spaced apart from a support surface of the supporter by a predetermined interval, and the release film separated from the pad is discharged through a gap formed between the supporter and the separation member.

8. The film peeling device of claim 6, wherein the separation member is positioned such that the blade faces the boundary portion between the pad and the release film.

9. The film peeling device of claim 1, wherein the height of the end of the separation member is at least higher than the height of a support surface of the supporter.

10. The film peeling device of claim 9, wherein the difference in height between the end of the separation member and the support surface is at least greater than the thickness of the release film.

11. The film peeling device of claim 1, wherein the pair of rollers comprise:
an upper roller that applies pressure to the upper portion of the pad and rotates in one direction; and
a lower roller provided at the lower portion of the upper roller that applies pressure to the lower portion of the pad and rotates in a direction opposite to the rotation direction of the upper roller.

12. The film peeling device of claim 11, wherein the supporter is disposed such that the end of the supporter facing the rollers faces the lower roller.
